# FASCICULE DE BREVET EUROPEEN

(11) **EP 1 853 842 B1**
(45) Date de publication et mention de la délivrance du brevet: **29.07.2009**
(21) Numéro de dépôt: 06726003.4
(22) Date de dépôt: 01.03.2006
(51) Int. Cl.: F16L 37/084, F16L 37/42

(54) **RACCORD RAPIDE POUR LA JONCTION DE DEUX CANALISATIONS D'ACHEMINEMENT D'UN GAZ SOUS PRESSION**
SCHNELLKUPPLUNG ZUR VERBINDUNG ZWEIER DRUCKGASLEITUNGEN
QUICK COUPLING FOR THE JOINING OF TWO PRESSURISED GAS LINES

(30) Priorité: 02.03.2005 FR 0502118
(43) Date de publication de la demande: 14.11.2007
(73) Titulaire: Staubli Faverges, 74210 Faverges (FR)
(72) Inventeur: TIBERGHIEN, Alain-Christophe, F-74320 Sevrier (FR); CHAMBAUD, Antoine, F-74210 Giez (FR); PASTORE, Olivier, F-73400 Ugine (FR)
(74) Mandataire: Myon, Gérard Jean-Pierre
(86) Numéro de dépôt international: PCT/FR2006/000462
(87) Numéro de publication internationale: WO 2006/092503

(56) Documents cités:
- EP-A- 1 333 218
- EP-A- 1 422 462
- US-A- 5 806 832

## Description

La présente invention concerne un raccord rapide pour la jonction temporaire de deux canalisations parcourues par un gaz sous pression.

Un tel raccord rapide comporte classiquement deux éléments mâle et femelle complémentaires, que l'on raccorde en les emmanchant l'un dans l'autre. L'élément femelle est généralement raccordé à une canalisation amont et il est pourvu d'un clapet d'obturation, que l'élément mâle manoeuvre vers une position ouverte lorsqu'on l'enfonce dans cet élément femelle. L'élément mâle est généralement raccordé à une canalisation aval. Pour éviter que, lors de la déconnexion, l'élément mâle soit expulsé avec violence hors de l'élément femelle du fait de la pression du gaz dans la canalisation aval, un mécanisme de verrouillage de l'élément mâle dans l'élément femelle peut être conçu de manière à ne pouvoir libérer l'élément mâle totalement qu'après avoir été placé temporairement dans une position dans laquelle la canalisation aval se purge par le raccord. Dans la demande de brevet français 1 503 989 est décrit un tel mécanisme de verrouillage, dont la présence dans un raccord rend plus sûr l'emploi de ce raccord.

Toutefois, il peut arriver que, lors de la déconnexion des canalisations par un opérateur, ce dernier ne maintienne pas assez longtemps le mécanisme de verrouillage dans sa position de purge de la canalisation aval, auquel cas peut avoir lieu une éjection violente et dangereuse de l'élément mâle hors de l'élément femelle.

Dans la demande de brevet européen 1 333 218 est décrit un raccord dont la dissociation requiert non pas une mais deux manoeuvres manuelles d'un verrou afin que le risque d'une éjection violente de l'élément mâle soit moindre. Outre qu'elles sont fastidieuses et que, étant successives, elles imposent à l'opérateur d'attendre, ces deux manoeuvres sont séparées l'une de l'autre par une autre manoeuvre du verrou qui est le fait d'un ressort de rappel et dont le déclenchement dépend de forces de frottement. Ces forces de frottement sont fonction de plusieurs paramètres difficiles à contrôler, tels que l'état de propreté du raccord, et leur variabilité peut conduire à un comportement aléatoire du déverrouillage.

L'invention a au moins pour but d'augmenter encore la sûreté des raccords rapide pour la jonction temporaire de deux canalisations parcourues par un fluide sous pression.

A cet effet, l'invention a pour objet un raccord rapide pour la jonction temporaire de deux canalisations amont et aval parcourues par un gaz sous pression, ce raccord comportant une partie mâle et une partie femelle qui comprend, d'une part, un élément femelle creux pour l'emmanchement d'une fiche mâle de la partie mâle et, d'autre part, un verrou de retenue d'un élément de raccordement choisi parmi la fiche mâle et un éventuel adaptateur mobile entre une position de verrouillage de la fiche mâle raccordée dans la partie femelle et une position de libération de cette fiche mâle, le verrou étant mobile par rapport à l'élément femelle entre une première position, dans laquelle ledit verrou est à même de retenir l'élément de raccordement enfoncé à une première profondeur dans la partie femelle et raccordé à joint étanche à cette partie femelle, et une deuxième position, dans laquelle ledit verrou est à même de retenir l'élément de raccordement enfoncé à une deuxième profondeur inférieure à la première profondeur, le raccord comprenant un passage de purge de la canalisation aval à l'extérieur lorsque l'élément de raccordement est à la deuxième profondeur mais pas lorsque l'élément de raccordement est à la première profondeur, **caractérisé en ce que** ledit verrou est configuré de manière à être au moins en partie rappelé vers sa deuxième position par une surpression dans ledit passage de purge.

Selon d'autres caractéristiques avantageuses de ce raccord rapide :
- le verrou est monté à coulissement de manière à être mobile selon une direction de coulissement, dans un trou communiquant avec ledit passage de purge ;
- une première portion du verrou sépare l'une de l'autre une première zone, soumise à la pression externe, et une deuxième zone qui fait partie dudit trou et communique avec le passage de purge, la première portion du verrou étant disposée de telle manière qu'on rencontre cette première portion lorsque, en partant de la deuxième zone, on se déplace dans le sens dans lequel s'effectue le déplacement du verrou depuis sa première position vers sa deuxième position ;
- une deuxième portion du verrou sépare l'une de l'autre la deuxième zone et une troisième zone, qui est soumise à la pression externe, la deuxième portion du verrou étant décalée de la première portion du verrou au moins selon ladite direction de coulissement, de manière à être du même côté que ladite deuxième zone par rapport à la première portion du verrou, l'aire de la section transversale de la première portion du verrou étant supérieure à l'aire de la section transversale de la deuxième portion du verrou ;
- le verrou a une surface totale se divisant en au moins un premier, un deuxième, un troisième et éventuellement un quatrième type de surface, la ou les surfaces du premier type n'étant pas soumises à la pression du fluide se trouvant dans ledit passage de purge, la ou les surfaces du deuxième type assurant un guidage à jeu réduit et glissant sur la paroi dudit trou, la ou les surfaces des troisième et quatrième types étant soumises à la pression du fluide se trouvant dans ledit passage de purge, la ou les éventuelles surfaces du quatrième type se distinguant de la ou des surfaces du troisième type en ce que cette pression y exerce une poussée tendant à déplacer le verrou de sa deuxième position vers sa première position, l'aire de la projection de la surface du troisième type ou la somme des aires des projections des surfaces du troisième type parallèlement à ladite direction de coulissement, sur un plan perpendiculaire à cette direction de coulissement, étant supérieure à l'aire de la projection de l'éventuelle surface du quatrième type ou à la somme des aires des projections des surfaces du quatrième type parallèlement à ladite direction de coulissement, sur un plan perpendiculaire à cette direction de coulissement. Le verrou est avantageusement disposé dans un logement borgne et chargé élastiquement à l'opposé du fond du logement, la ou les surfaces du troisième type étant orientée vers le débouché de ce logement, alors que la ou les éventuelles surfaces du quatrième type sont orientées vers le fond de ce logement ;
- le raccord comporte un organe de manoeuvre du verrou au moins vers sa deuxième position, cet organe de manoeuvre et le verrou étant deux pièces distinctes ;
- l'organe de manoeuvre est monté à coulissement dans le même trou que le verrou, la partie femelle comportant une butée de retenue de l'organe de manoeuvre dans ledit trou ;
- l'organe de manoeuvre comporte au moins une portion formant piston et séparant l'une de l'autre la deuxième zone et une troisième zone, qui est soumise à la pression externe, ladite portion formant piston étant décalée de la première portion du verrou au moins selon ladite direction de coulissement, de manière à être du même côté que ladite deuxième zone par rapport à cette première portion du verrou ;
- le verrou est accessible depuis l'extérieur d'un trou dans lequel il coulisse et qui communique avec le passage de purge ;
- le verrou est monobloc ;
- le verrou comprend deux parties aptes à s'écarter l'une de l'autre sous l'effet de la surpression dans le passage de purge ;
- le raccord comporte un organe élastique de rappel du verrou vers sa première position ;
- une partie amont parmi les parties mâles et femelles comporte une soupape pour son obturation, la partie aval parmi les parties mâle et femelle étant adaptée pour placer cette soupape en position ouverte lorsque ledit élément de raccordement est enfoncé à ladite première profondeur et pour ne pas agir sur la position de cette soupape lorsque ledit élément de raccordement est à ladite deuxième profondeur.

L'invention sera bien comprise à la lecture de la description qui va suivre, donnée uniquement à titre d'exemple et faite en se référant aux dessins annexés, sur lesquels :
- la figure 1 est une coupe axiale et schématique qui représente un raccord selon un premier mode de réalisation de l'invention et sur laquelle les parties mâle et femelle de ce raccord sont dissociées ;
- la figure 2 est une coupe qui est analogue à la figure 1 et sur laquelle le raccord de cette figure 1 raccorde une canalisation amont à une canalisation aval ;
- la figure 3 est une coupe analogue à la figure 1 et illustre une première étape de la dissociation des parties mâle et femelle du raccord de cette figure 1 ;
- la figure 3A est une coupe transversale et schématique selon la ligne III-III de la figure 3 ;
- la figure 4 est une coupe analogue à la figure 1 et illustre une deuxième étape de la dissociation des parties mâle et femelle du raccord de cette figure 1 ;
- la figure 5, qui est une coupe analogue à la figure 1, représente un raccord selon un deuxième mode de réalisation de l'invention et illustre la même étape que la figure 3 ;
- la figure 6, qui est une coupe analogue à la figure 3, représente un raccord selon un troisième mode de réalisation de l'invention ;
- la figure 7, qui est une coupe analogue à la figure 3, représente un raccord selon un quatrième mode de réalisation de l'invention ;
- la figure 8, qui est une coupe analogue à la figure 3, représente un raccord selon un cinquième mode de réalisation de l'invention ; et
- la figure 9, qui est une coupe analogue à la figure 3 mais partielle et à plus grande échelle, représente un raccord selon un sixième mode de réalisation de l'invention.

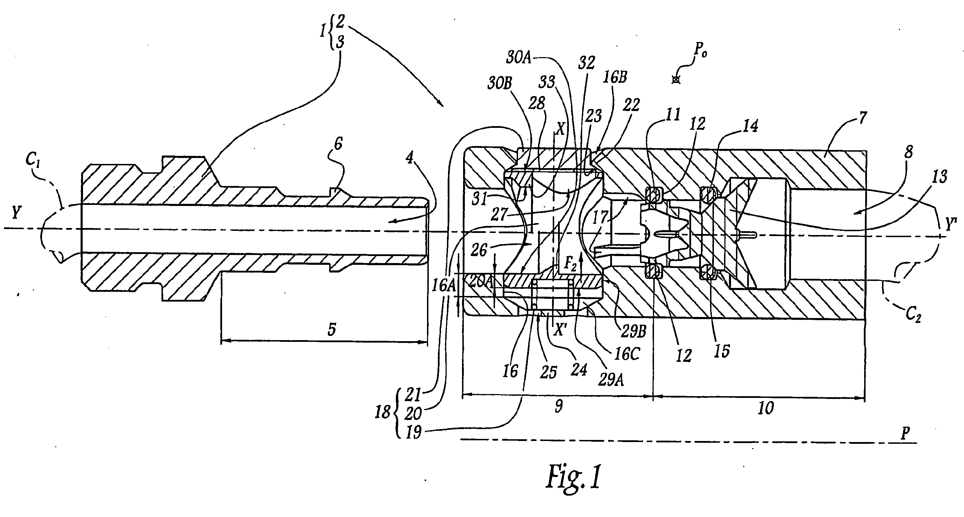

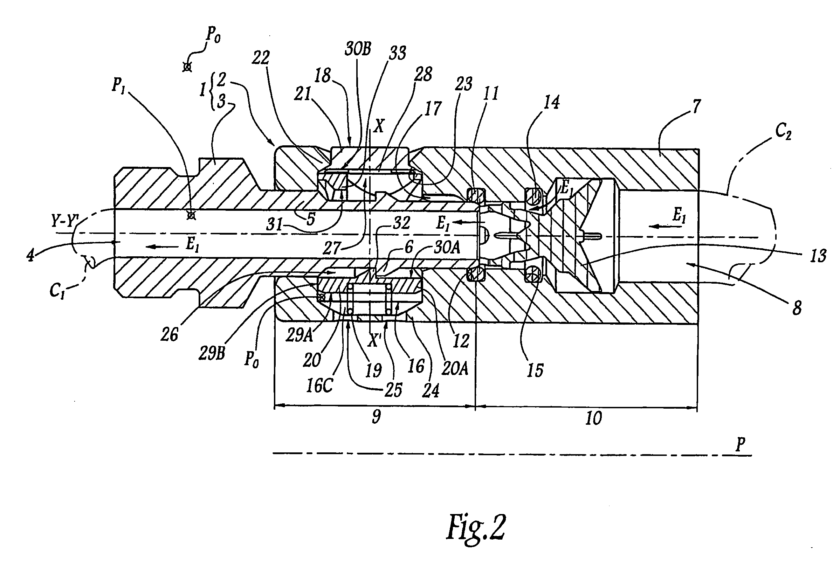

Sur la figure 1 est schématiquement représenté un raccord 1 destiné à raccorder plus particulièrement deux canalisations C₁ et C₂ parcourues par un fluide sous pression. Dans le présent texte et dans les revendications annexées, les termes « amont » et « aval », ainsi que les termes analogues, se réfèrent au sens d'écoulement du fluide sous pression dans le raccord 1, ce sens d'écoulement étant symbolisé par les flèches E₁ à la figure 2.

Le raccord 1 d'axe Y-Y' comporte une partie femelle 2 et une partie mâle complémentaire, qui est constituée par un élément mâle 3 dans l'exemple représenté.

Un passage axial 4 pour le fluide sous pression traverse de part en part l'élément mâle 3 et débouche aux deux extrémités de celui-ci. Des moyens de raccordement d'une extrémité de ce passage 4 à la canalisation C₁, qui est en aval du raccord 1 et qui est schématisée en traits mixtes, peuvent être de tout type approprié et, par exemple, comprendre un collier de serrage non représenté dans un souci de clarté.

L'élément 3 comporte une portion d'extrémité en forme de fiche 5. Au niveau de cette dernière et à distance de son bord libre, l'élément 3 est pourvu d'un bourrelet annulaire 6.

La partie femelle 2 comprend un corps ou élément femelle 7 qu'un trou axial 8 centré sur l'axe Y-Y' traverse de part en part. Une portion de ce trou 8 est complémentaire de la fiche 5 et forme un logement 9 pour l'emmanchement de cette fiche 5. Une autre portion du trou 8 prolonge ce logement 9 et forme un passage 10 pour le fluide sous pression. Des moyens de raccordement de l'embouchure du passage 10 à la canalisation C₂, qui est en amont du raccord 1 et qui est schématisée en traits mixtes, peuvent être de tout type approprié et, par exemple, comprendre un collier de serrage non représenté dans un souci de clarté. A la jonction du logement 9 et du passage 10, un joint annulaire 11 destiné à assurer l'étanchéité du raccordement du passage 4 et 10 est monté dans une gorge annulaire 12.

Une soupape 13 d'obturation du passage 10 est montée à coulissement dans ce dernier d'une manière connue en soi. Elle est mobile entre une position ouverte et une position fermée, qui est celle illustrée à la figure 1 et dans laquelle elle dépasse dans le logement 9 et obture le passage 10 en étant appliquée contre un joint annulaire d'étanchéité 14 monté dans une gorge annulaire 15. Dans sa position ouverte illustrée à la figure 2, la soupape 13 est à l'écart du joint 14.

Un trou 16 transversal par rapport à l'axe Y-Y' est ménagé dans l'élément femelle 7 de manière à couper le logement 9. Plusieurs gorges axiales 17, au nombre de trois dans l'exemple représenté, s'étendent à partir de ce trou 16, en direction du passage 10, et s'arrêtent avant d'avoir atteint le joint 11.

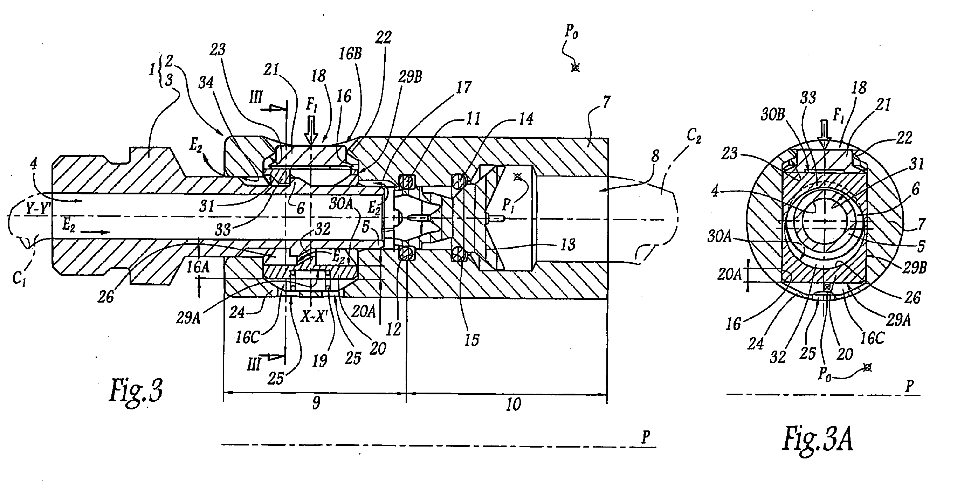

Un mécanisme 18 de verrouillage de la fiche 5 dans le logement 9 équipe l'élément femelle 7. Il est monté dans le trou 16 et comporte un ressort 19, un verrou 20 et un organe 21 de manoeuvre de ce verrou 20. L'organe de manoeuvre est plus précisément un bouton 21 de poussée du verrou 20 à l'encontre de l'effort du ressort 19, dans le sens indiqué par la flèche F₁, qui schématise une poussée manuelle aux figures 3 et 3A. Le bouton 21 est monté à coulissement dans le débouché 16B du trou 16 et peut de ce fait être manoeuvré manuellement vers l'intérieur de l'élément 7, depuis l'extérieur de cet élément 7. Un resserrement 22 définit une butée 23 de retenue de ce bouton 21 dans l'élément 7.

Le verrou 20 est également monté à coulissement dans le trou 16, si bien qu'il est mobile selon l'axe X-X' de ce trou 16, c'est-à-dire de manière sensiblement transversale à l'axe Y-Y' du logement 9 et du passage 10.

Le ressort 19 remplit la fonction d'un organe élastique de rappel du verrou 20 vers le débouché 16B, c'est-à-dire dans la direction schématisée par la flèche F₂ à la figure 1. A cet effet, il est comprimé entre ce verrou 20 et un fond 24 que le trou 16 comporte à l'opposé du bouton 21. On note 16A la portion du trou 16 dans laquelle coulisse une portion 20A du verrou 20 opposée au bouton 21. A la manière d'un piston, la portion 20A obture la portion 16A de façon étanche. Le fond 24 est percé de plusieurs évents 25 mettant une zone terminale 16C du trou 16 en communication avec l'extérieur. Cette zone 16C est donc toujours à la pression externe Po.

Les figures 1 à 4 sont schématiques notamment en ce que, dans un souci de clarté, l'élément femelle 7 y est représenté comme étant d'un seul tenant alors que, en réalité, il résulte de l'assemblage de plusieurs pièces qui sont dissociées lors de l'installation du verrou 20, du bouton 21 et de la soupape 13.

Un passage 26 pour la fiche 5 est percé dans le verrou 20 et relie deux portions du logement 9. L'une de ces deux portions est plus profonde et moins large que l'autre. Sa paroi est à même de guider l'extrémité distale de la fiche 5 et délimite les gorges axiales 17. Une extrémité du trou 16 est obturée par le bouton 21 mais pas par le verrou 20 du fait d'un passage 27 ménagé dans ce verrou 20. A son autre extrémité, le trou 16 est, en revanche, obturé par le verrou 20. Le verrou 20 et le bouton 21, qui sont deux éléments distincts l'un de l'autre, délimitent avec la paroi du trou 16 une chambre de volume variable 28, que les passages 26 et 27 mettent en communication avec le logement 9.

La surface totale du verrou 20 peut être divisée en quatre types de surface. Le premier type de surface n'est pas au contact du fluide présent dans le logement 9. De plus, ne coulissant pas sur la paroi du trou 16, il n'assure pas un guidage du verrou 20. Dans l'exemple représenté, seule la surface d'extrémité 29A, qui est en regard du fond 24, est du premier type. La surface du deuxième type, unique et percée du passage 26 dans l'exemple représenté, est référencée 29B. Il s'agit de la surface qui guide le verrou 20 lors de son coulissement dans le trou 16, en glissant sur la paroi de ce trou. Les troisième et quatrième types de surface sont au contact du fluide présent dans le logement 9 et se distinguent l'un de l'autre par leur orientation. Plus précisément, le troisième type de surface est globalement tourné dans la direction F₂, c'est-à-dire vers le débouché 16B et le bouton 21, alors que le quatrième type de surface est tourné à l'opposé, c'est-à-dire vers le fond 24. Dans l'exemple représenté, il y a deux surfaces du troisième type. Ces deux surfaces sont référencées 30A et 30B. La surface 30A délimite partiellement le passage 26, tandis que la surface 30B délimite partiellement la chambre de volume variable 28. Dans l'exemple représenté, seule une surface est du quatrième type. Elle est référencée 31. Les projections de la surface 31 et de la surface 30B parallèlement à la direction de coulissement X-X' du verrou, par exemple sur un plan P perpendiculaire à cette direction, ont la même aire. De ce fait, la projection des surfaces 30A et 30B parallèlement à cette direction de coulissement X-X', sur le plan P, a une aire supérieure à la projection de la surface 31 parallèlement à cette même direction de coulissement X-X', toujours sur le plan P.

Le verrou 20 est pourvu de deux dents ou saillies internes 32 et 33 de retenue de l'élément mâle 3 par son bourrelet 6. Ces saillies 32 et 33 sont décalées l'une de l'autre selon l'axe Y-Y'. Chacune d'elles présente la forme d'un bourrelet s'étendant sur la moitié de la circonférence du passage 26. La saillie 32 est décalée dans le sens I d'introduction de la fiche 5 dans l'élément 7, par rapport à la saillie 33. Par rapport à l'axe Y-Y', elle est du même côté que le ressort 19, alors que la saillie 33 est du même côté que le bouton 21.

Sur la figure 1, la partie femelle 2 et l'élément mâle 3 sont dissociés. La soupape 13 peut coulisser librement et la pression du fluide dans la canalisation amont C₂ la place dans sa position aval d'obturation. De plus, le ressort 19 pousse le verrou 20 contre le bouton 21, qui est ainsi appliqué contre le resserrement 22.

Pour assembler la partie femelle 2 et l'élément mâle 3, on enfonce la fiche 5 dans le logement 9. Lors de cela, le bourrelet 6 s'encliquette derrière la saillie 32. A la fin de l'introduction de la fiche 5, cette dernière pousse la soupape 13 vers l'amont, jusque dans sa position ouverte.

Sur la figure 2, le raccord 1 assure la jonction des canalisations C₁ et C₂. La fiche 5, que la saillie 32 retient par son bourrelet 6 dans le logement 9, maintient la soupape 13 dans sa position ouverte, à l'encontre de la pression P₁ du fluide dans la canalisation amont C₂. De plus, le joint 11 assure l'étanchéité du raccordement des passages 4 et 10, tout en isolant hermétiquement le logement 9 de ces passages 4 et 10.

Pour dissocier l'élément mâle 3 de la partie femelle 2, on exerce une poussée F₁ sur le bouton 21 de manière à déplacer le verrou 20 vers le fond 24 suffisamment pour que le bourrelet 6 puisse franchir la saillie 32 et que la pression du fluide dans le raccord 1 puisse faire coulisser la fiche 5 par rapport à l'élément femelle 7, vers l'extérieur. Suite à cela, le raccord 1 est tel qu'illustré aux figures 3 et 3A.

Sur ces figures 3 et 3A, la saillie 33 empêche l'éjection de la fiche 5 hors de l'élément 7 en retenant cette fiche 5 par son bourrelet 6. La fiche 5 est enfoncée dans l'élément 7 à une moindre profondeur qu'à la figure 2, de telle manière que la soupape 13 peut obturer le passage 10 et que les gorges axiales 17 mettent en communication le passage 4 avec le passage 26. Il y a alors purge de la canalisation aval C₁, dont du fluide s'échappe en passant par le passage 4, et ensuite par les gorges 17, puis par le passage 26, et enfin par un interstice 34 entre la paroi de la portion la moins profonde du logement 9 et la fiche 5, ce qu'illustre les flèches E₂. Du fait de l'étroitesse de l'interstice 34, la perte de charge au niveau de cet interstice 34 est importante. C'est pourquoi, durant la purge E₂, il règne une surpression P₂ dans le logement 9 et dans la chambre 28, c'est-à-dire une pression P₂ sensiblement supérieure à la pression externe P₀. La portion 20A du verrou 20 sépare la zone soumise à la surpression P₂ de la zone à la pression externe P₀.

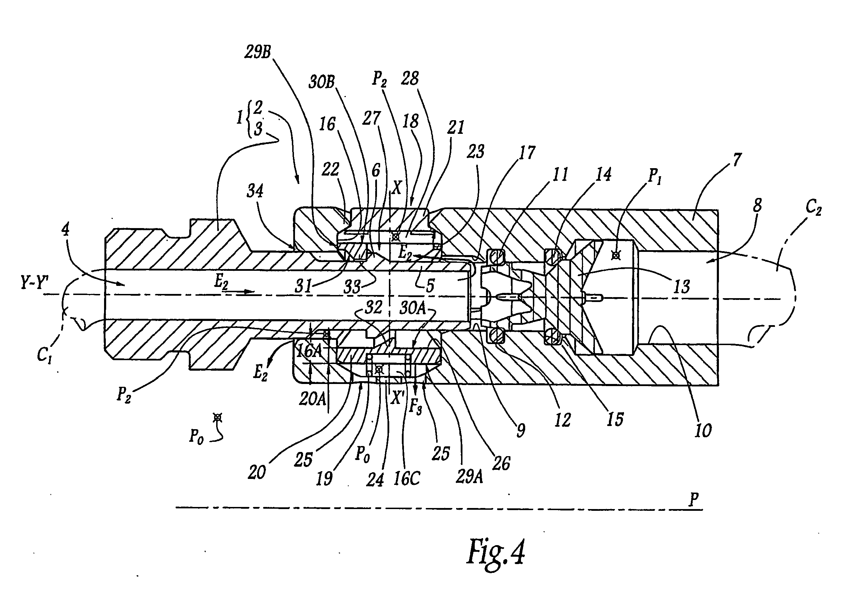

Sur la figure 4, la purge E₂ de la canalisation aval C₁ se poursuit sans éjection de l'élément 3 hors de l'élément 7, alors qu'on a cessé d'appuyer sur le bouton 21. Cela résulte de la surpression P₂ dans le logement 9 et dans la chambre 28, par rapport à l'extérieur du raccord 1. Cette surpression P₂ s'exerce sur les surfaces 30A, 30B et 31 du verrou 20 et produit sur ce verrou un effort F₃ parallèle à l'axe de coulissement X-X', opposé au rappel exercé par le ressort 19 dans la direction F₂ et résultant de ce que la somme des aires des projections des surfaces 30A et 30B parallèlement à la direction de coulissement X-X', sur le plan P, a une aire supérieure de la projection de la surface 31 parallèlement à cette direction X-X', toujours sur le plan P.

En d'autres termes, la poussée résultant de l'application de la surpression P₂ sur les surfaces 30B et 31 est nulle, si bien que le verrou 20 est seulement soumis à la poussée résultant de l'application de cette surpression P₂ sur la surface 30A, c'est-à-dire sur la portion 20A du verrou 20, à la poussée résultant de l'application du la pression externe P₀ sur la surface 29A, c'est-à-dire sur cette même portion 20A, et à celle exercée par le ressort 19. Or, ce ressort 19 est taré de manière à ne pouvoir rappeler le verrou 20 dans la direction F₂ qu'une fois que la surpression P₂ dans le logement 9 et la chambre 28 est passée en dessous d'un seuil prédéterminé en deçà duquel cette surpression ne peut plus conduire à une éjection violente et dangereuse de l'élément 3. Le personnel et le matériel se trouvant dans le voisinage du raccord 1 sont ainsi protégés, conformément au but de l'invention.

On notera que le déverrouillage du raccord 1 ne requiert qu'une seule pression manuelle, ce qui est avantageux.

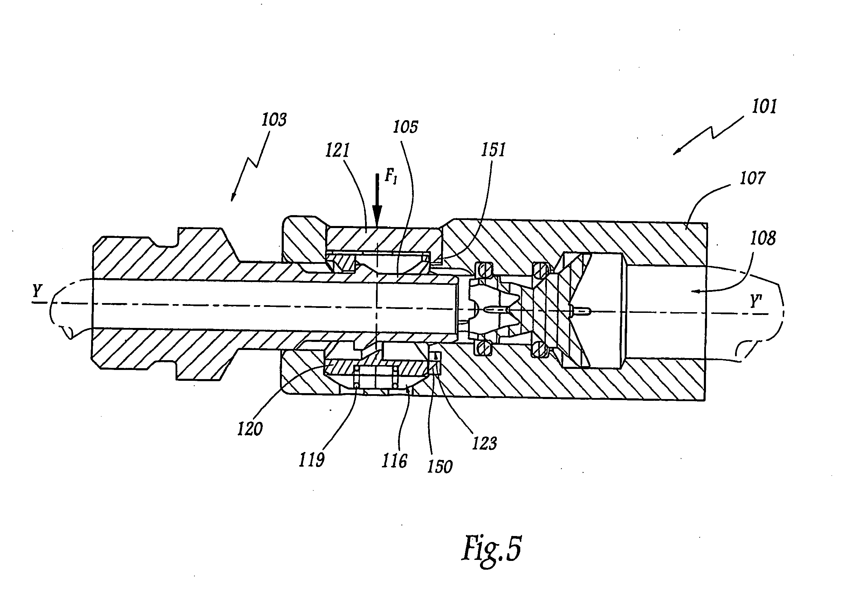

Sur la figure 5 est représenté un raccord 101 selon un deuxième mode de réalisation de l'invention. Dans ce qui suit, on ne décrit que ce qui distingue ce raccord 101 du raccord 1. En outre, une référence utilisée ci-après pour désigner une partie du raccord 101 analogue ou équivalente à une partie référencée du raccord 1 est construite en augmentant de 100 la référence repérant cette partie sur ce raccord 1.

Le trou 116 ne comporte pas de resserrement semblable au resserrement 22. La butée 123 se trouve du même côté que le ressort 119, par rapport à l'axe Y-Y' du trou 108. Cette butée 123 présente la forme d'un épaulement à même de retenir une portion d'extrémité 150 d'un doigt 151 équipant le bouton 121.

Le bouton 121 permet de commander comme précédemment un verrou 120 de retenue de la fiche 105 d'un élément mâle 103 en exerçant un effort de poussée F₁.

Comme les figures 1 à 4, la figure 5 est schématique en ce que l'élément femelle 107 y est représenté comme étant d'un seul tenant.

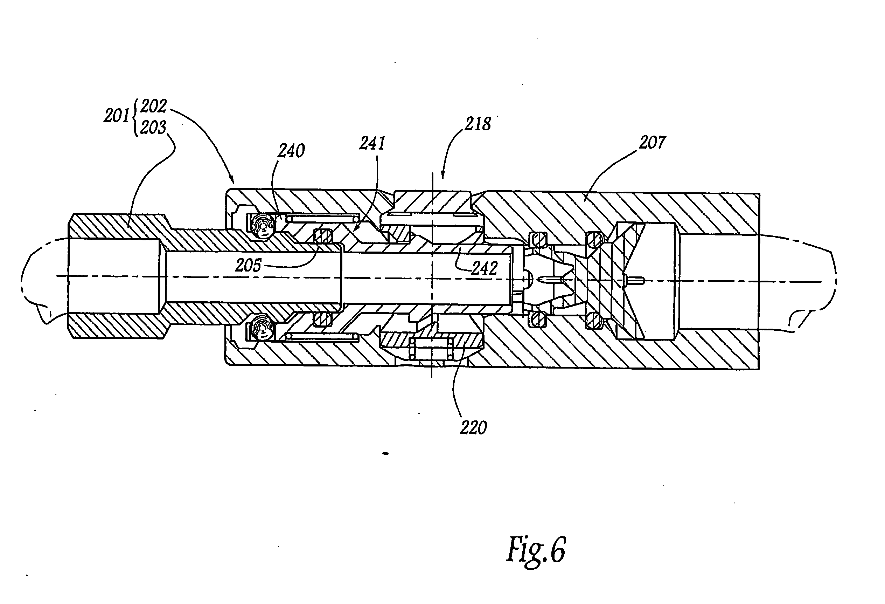

Sur la figure 6, qui est schématique comme les figures 1 à 5, est représenté un raccord 201 selon un troisième mode de réalisation de l'invention. Ce raccord 201 comprend une partie mâle 203 et une partie femelle 202 dont le corps 207 est équipé d'un adaptateur 240 ayant la même fonction que l'adaptateur décrit dans la demande de brevet EP 1 422 462. A son extrémité proximale, cet adaptateur 240 comporte des moyens femelles 241 de réception et de raccordement de la fiche mâle 205 de la partie mâle 203, tandis qu'il définit une fiche mâle 242 à son autre extrémité. Il s'agit donc d'un élément de raccordement à la fois mâle et femelle. Le corps femelle 207 est également équipé d'un mécanisme de verrouillage 218 qui comprend un verrou 220 semblable au verrou 20 et servant à verrouiller la fiche 242 de l'adaptateur 240 à deux profondeurs différentes. Le verrou 220 fonctionne comme le verrou 20.

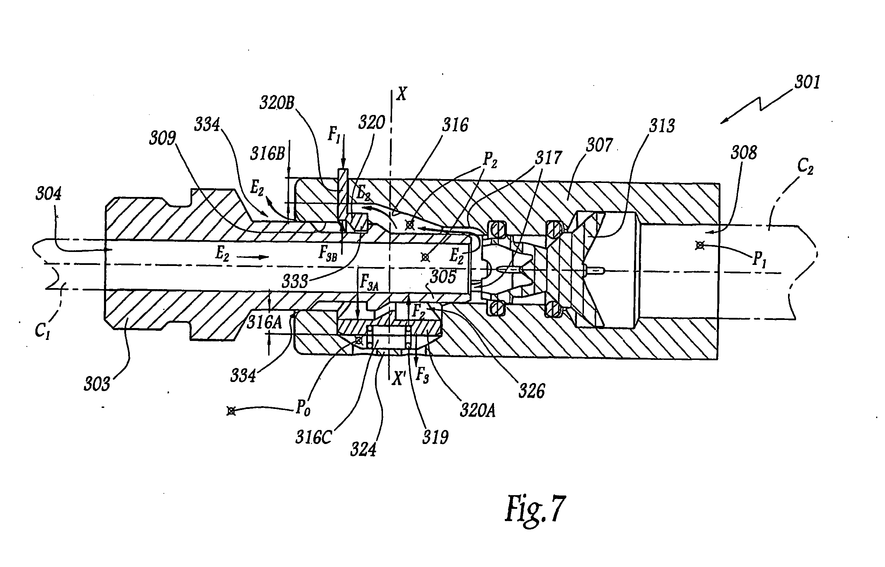

Sur la figure 7, qui est schématique comme les figures 1 à 6, est représenté un raccord 301 selon un quatrième mode de réalisation de l'invention. Dans ce qui suit, on ne décrit que ce qui distingue ce raccord 301 du raccord 1. En outre, une référence utilisée ci-après pour désigner une partie du raccord 301 analogue ou équivalente à une partie référencée du raccord 1 est construite en augmentant de 300 la référence repérant cette partie sur le raccord 1.

Le verrou 320 est monobloc mais comporte non pas une mais deux portions obturant de manière sensiblement étanche le trou 316, tout en coulissant dans ce dernier, à la manière d'un piston. L'une, référencée 320A, de ces deux portions est identique à la portion 20A du verrou 20. L'autre portion constitutive du verrou 320 et obturant de manière sensiblement étanche le trou 316 est référencée 320B et se trouve à l'opposé de la portion 320A, selon la direction de coulissement X-X' du verrou 320. Plus précisément, le trou 316 comporte deux extrémités opposées 316A et 316B, dans chacune desquelles coulisse l'une des portions 320A et 320B.

La portion 320A sépare le passage central 326 d'une zone d'extrémité 316C du trou 316 jouxtant le fond 324, cette zone 316C étant à la pression externe Po.

La portion 320B présente la forme d'une tige rectiligne, dont l'extrémité libre forme un bouton dépassant de l'élément femelle 307. On peut manoeuvrer le verrou 320 en exerçant une poussée manuelle F₁ sur ce bouton, au lieu de l'exercer sur un bouton du type de celui référencé 21. D'ailleurs, le raccord 310 n'a pas de bouton 21.

Sur la figure 7, la poussée manuelle F₁ a déplacé le verrou 320 vers le fond 324, de telle manière que la pression P₁ du fluide s'écoulant jusqu'alors dans le raccord 301 a pu faire coulisser la fiche 305 par rapport à l'élément femelle 307, vers l'extérieur.

Toujours sur la figure 7, la saillie 333 empêche l'éjection complète de la fiche 305 hors de l'élément 307. Cette fiche 305 est enfoncée dans l'élément 307 à une profondeur telle que la soupape 313 peut obturer le trou 308 et que les gorges axiales 317 mettent en communication le passage 304 avec le passage 326. Il y a alors purge de la canalisation aval, lors de quoi le fluide s'échappe en passant par le passage 304, et ensuite par les gorges 317, puis par le passage 326, et enfin par l'interstice 334.

Du fait de la perte de charge au niveau de cet interstice 334, il règne une surpression P₂ dans le logement 309, durant la purge E₂. Les portions 320A et 320B du verrou 320 séparent la zone soumise à la surpression P₂ de la zone soumise à la pression externe P₀. Lorsqu'on se déplace selon la direction X-X' de coulissement du verrou 320, la portion 320B se trouve du même côté que la zone soumise à la surpression P₂, par rapport à la portion 320A.

La surpression P₂ exerce sur la portion 320B une poussée F_{3B} dirigée dans le même sens que le rappel F₂ du ressort 319. En revanche, sur la portion 320A, cette surpression P₂ exerce une poussée F_{3A} dirigée dans le sens opposé à ce rappel F₂ et donc dans le sens opposé à la poussée F_{3B}. Comme l'aire de la section transversale 320A est supérieure à l'aire de la section transversale de la portion 320B, la poussée F_{3B} est inférieure à la poussée F_{3A}. Aussi, la poussée totale F₃ exercée par la surpression P₂ sur le verrou 320 est dirigée dans la direction opposée au rappel F₂. Le ressort 319 est taré de manière que son rappel F₂ soit inférieur à cette poussée totale F₃ et que cette dernière maintienne donc le verrou 320 dans la position représentée à la figure 7, jusqu'à ce que la surpression P₂ soit passée au-dessous d'un seuil prédéterminé en deçà duquel cette surpression ne peut plus conduire à une éjection violente et dangereuse de l'élément 303.

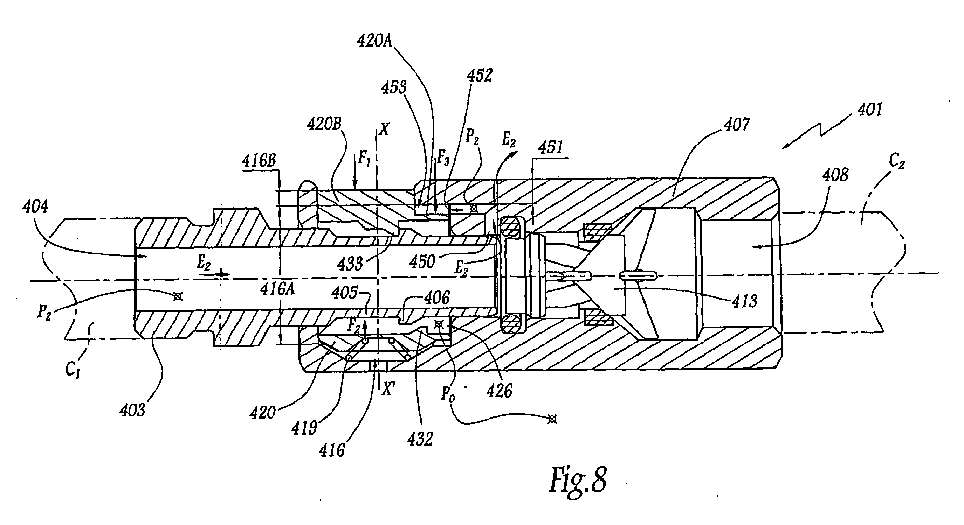

Sur la figure 8, qui est schématique comme les figures 1 à 7, est représenté un raccord 401 selon un cinquième mode de réalisation de l'invention. Dans ce qui suit, on ne décrit que ce qui distingue ce raccord 401 du raccord 1. En outre, une référence utilisée ci-après pour désigner une partie du raccord 401 analogue ou équivalente à une partie référencée du raccord 1 est construite en augmentant de 400 la référence repérant cette partie sur le raccord 1.

Dans l'élément femelle 407 est ménagé un passage de purge 450, qui relie une portion du trou 408 et l'extérieur, cette portion se trouvant en aval de la soupape 413. Le passage de purge 450 comporte une portion aval 451, au niveau de laquelle il a une section de passage sensiblement plus petite qu'ailleurs. En amont de la portion 451, un passage de liaison 452 se raccorde sur le passage 450, qu'il relie au trou 416. Ce passage 452 débouche plus précisément à la jonction de deux portions 416A et 416B de ce trou 416. La portion 416B est décalée de la portion 416A, selon la direction de coulissement X-X', dans la direction du rappel F₂ exercé par le ressort 419. En outre, la section transversale de cette portion 416B a une aire plus petite que la section transversale de la portion 416A. Au sens où on l'entend ici, les sections transversales des portions 416A et 416B sont les sections de ces portions 416A et 416B selon un plan perpendiculaire à la direction de coulissement X-X'.

Une portion 420A du verrou 420 obture de manière sensiblement étanche la portion 416A, tout en y coulissant et en y étant guidée. Une portion 420B du verrou 420 obture de manière sensiblement étanche la portion 416B, tout en y coulissant. Elle forme en outre un bouton, qui est accessible de l'extérieur et sur lequel on peut donc exercer une poussée manuelle F₁ afin de manoeuvrer le verrou 420 à l'encontre du rappel F₂ exercé par le ressort 419. Aussi, le raccord 401 peut ne pas avoir de bouton du type de celui référencé 21, ce qui est d'ailleurs le cas dans l'exemple représenté. A la jonction des portions 420A et 420B, le verrou 420 forme un épaulement 453.

Sur la figure 8, la poussée F₁ a déplacé le verrou 420 de manière que le bourrelet 406 s'est décroché de la saillie 432, après quoi la pression du fluide qui régnait alors dans le raccord 401 a fait coulisser la fiche 405 par rapport à l'élément femelle 407, vers l'extérieur.

Toujours sur la figure 8, la saillie 433 retient la fiche 405 par son bourrelet 406. Cette fiche 405 est enfoncée dans l'élément 407 à une profondeur telle que la soupape 413 obture le trou 408 et qu'en aval de cette soupape 413, le passage 404 communique avec le passage de purge 450. Il y a alors purge de la canalisation aval C₁, dont le fluide s'échappe en passant par le passage 404, puis par le passage de purge 450, mais pas par le passage 426.

Du fait de la faible section de passage de la portion aval 451, la perte de charge au niveau de cette portion aval 451 est importante. C'est pourquoi, durant la purge E₂, il règne une surpression P₂ dans le passage 452. Cette surpression P₂ s'applique sur l'épaulement 453 et y exerce une poussée F₃ parallèle à l'axe de coulissement X-X' et agissant à l'encontre du rappel F₂ exercé par le ressort 419. Ce ressort 419 est taré de manière à ne pouvoir rappeler le verrou 420 qu'une fois que la surpression P₂ est passée en dessous d'un seuil prédéterminé en deçà duquel cette surpression ne peut plus conduire à une éjection violente et dangereuse de l'élément mâle 403. On notera que, normalement, la surpression P₂ ne règne pas dans le passage 426, qui est à la pression externe P₀, mais dans lequel la pression peut toutefois s'élever sans que le fonctionnement normal du raccord 401 en soit pour autant affecté.

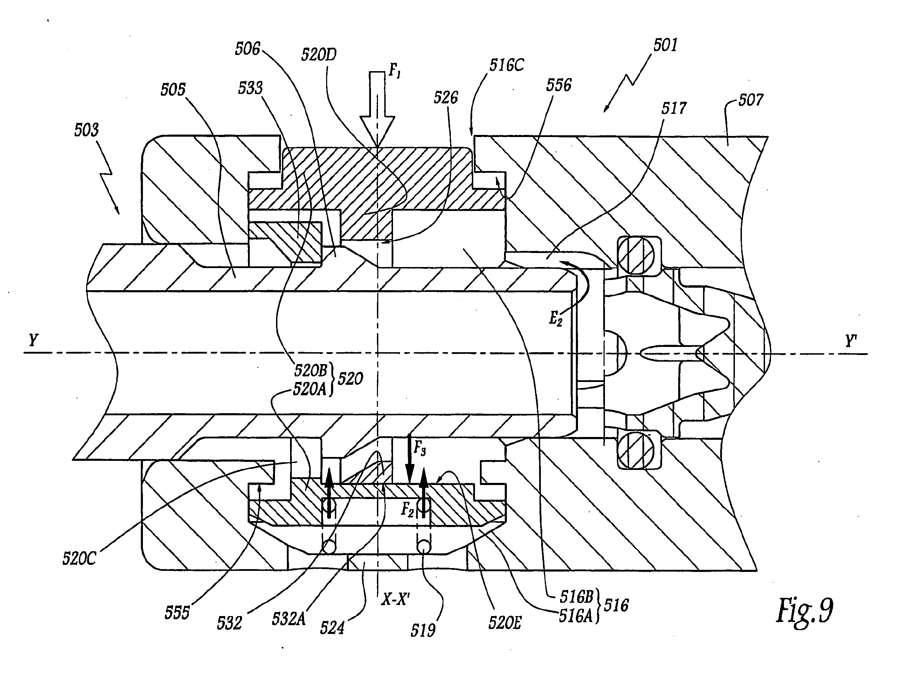

Sur la figure 9, qui est schématique comme les précédentes, est représenté partiellement un raccord 501 selon un sixième mode de réalisation de l'invention. Dans ce qui suit, on ne décrit que ce qui distingue ce raccord 501 du raccord 1. En outre, une référence utilisée ci-après pour désigner une partie du raccord 501 analogue ou équivalente à une partie référencée du raccord 1 est construite en augmentant de 500 la référence repérant cette partie du raccord 1.

Dans l'élément femelle 507 de ce raccord 501 est ménagé un trou 516 qui s'étend selon une direction X-X' perpendiculaire à l'axe longitudinal Y-Y' de l'élément 507 qui est représenté monobloc mais peut être composé de plusieurs parties. La fiche 505 d'un élément mâle 503 est retenue en position dans l'élément femelle 507 au moyen d'un verrou 520 coulissant dans le trou 516. Le verrou 520 comprend deux parties 520A et 520B distinctes.

La partie 520A obture de façon sensiblement étanche une portion 516A du trou 516 située au voisinage du fond 524 de ce trou. La partie 520A est maintenue dans la partie 516A du trou 516 par deux épaulements 555 formés par le corps de l'élément 507. La partie 520A porte une extension annulaire 520C destinée à être traversée par la fiche 505 et dont la portion la plus éloignée du fond 524 forme une portion de retenue 533 apte à recevoir en appui un bourrelet externe 506 de la fiche 505.

La partie 520B coulisse de façon sensiblement étanche dans une portion 516B du trou 516 située au voisinage de son débouché 516C. La partie 520B est retenue en position dans l'orifice 516 grâce à deux épaulements 556 ménagés au voisinage du débouché 516C. La partie 520B est pourvue d'une extension annulaire 520D qui s'étend en direction de la partie 520A et qui est destinée à être traversée par la fiche 505. L'extension 520D forme une portion de retenue 532 qui inter-agit avec le bourrelet 506 lorsque le raccord 501 est dans une configuration complètement emmanchée correspondant à celle représentée à la figure 2 pour le raccord 1 du premier mode de réalisation.

La surface 532A de la portion 532 la plus éloignée de la partie principale de la partie 520B est destinée à venir en appui contre la surface 520E de la partie 520A qui est opposée au fond 524. Ainsi, un effort de poussée F₁ exercé sur la surface de la partie 520B accessible depuis l'extérieur du trou 526 peut être transmis à la partie 520A à l'encontre d'un effort élastique F₂ exercé par un ressort 519 intercalé entre la partie 520A et la fond 524.

Dans la configuration de la figure 9, lorsque l'effort F₁ est exercé, la dent 532 est escamotée en direction du fond 524, ce qui permet le retrait partiel de la fiche 505 par rapport à l'élément 507. La fiche 505 vient alors en appui, par son bourrelet 506, contre la portion 533. Un écoulement du fluide présent dans la canalisation reliée à l'élément mâle 503 est alors possible, comme représenté par la flèche E₂ à la figure 9, cet écoulement transitant par des gorges 517, analogues aux gorges 17 du premier mode de réalisation, pour parvenir dans un passage 526, analogue au passage 26 du premier mode de réalisation et défini entre les parties 520A et 520B. La surpression P₂ régnant alors dans la chambre définie entre les parties 520A et 520B a pour effet de pousser la partie 520A en direction du fond 524, à l'encontre de l'effort F₂, et la partie 520B à l'opposé du fond 524 vers les épaulements 556.

La surpression P₂ découle de l'accumulation de fluide dans le volume des gorges 517 et du passage 526. Cette surpression s'exerce notamment sur la surface 520E de la partie 520B qui subit ainsi un effort F₃ de poussée en direction du fond 524. La portion 533 qui est solidaire de la partie 520B est ainsi rappelée vers une position où elle est sur la trajectoire de retrait du bourrelet 506 par rapport à l'élément 507.

Sous l'effet de la surpression P₂, les parties 520A et 520B tendent à s'écarter l'une de l'autre.

Tant que la surpression P₂ demeure supérieure à une valeur prédéterminée, qui dépend de la constante de raideur du ressort 519, la partie 520A demeure plaquée par l'effort F₃ en direction du fond 524, de sorte que la portion 533 s'oppose efficacement au retrait de la fiche 505.

Du fait des fuites autour des parties 520A et 520B et de la fiche 505, la surpression P₂ diminue progressivement et l'effort F₂ vainc finalement l'effort F₃, ce qui repousse la partie 520A et la portion 533 vers le débouché 516C, en libérant ainsi la fiche 505.

Les caractéristiques techniques des différents modes de réalisation mentionnées ci-dessus peuvent être combinées dans le cadre de la présente invention telle que définie par les revendications.

## Revendications

1. Raccord rapide pour la jonction temporaire de deux canalisations amont et aval (C₂, C₁) parcourues par un gaz sous pression (P₁), ce raccord comportant une partie mâle (3 ; 103 ; 203 ; 303 ; 403 ; 503) et une partie femelle (2 ; 202) qui comprend, d'une part, un élément femelle creux (7 ; 107 : 240 ; 307 ; 407 ; 507) pour l'emmanchement d'une fiche mâle (5 ; 105 ; 205 ; 305 ; 405 ; 505) de la partie mâle (3 ; 103 ; 203 ; 303 ; 403 ; 503) et, d'autre part, un verrou (20 : 120 ; 220 ; 320 ; 420 ; 520) de retenue d'un élément de raccordement (5 ; 105 ; 240 ; 305 ; 405 ; 505) choisi parmi la fiche mâle (5 ; 105 ; 205 ; 305 ; 405 ; 505) et un éventuel adaptateur (240) mobile entre une position de verrouillage de la fiche mâle raccordée dans la partie femelle et une position de libération de cette fiche mâle, ledit verrou étant mobile par rapport à l'élément femelle entre une première position (figure 2), dans laquelle ledit verrou est à même de retenir l'élément de raccordement enfoncé à une première profondeur dans la partie femelle et raccordé à joint étanche à cette partie femelle, et une deuxième position (figures 3, 3A, 4 ; 5 ; 6 ; 7 ; 8 ; 9), dans laquelle ledit verrou est à même de retenir l'élément de raccordement enfoncé à une deuxième profondeur inférieure à la première profondeur, le raccord comprenant un passage (4, 17, 26, 34 ; 304, 317, 326, 334 ; 450 ; 517, 526) de purge de la canalisation aval (C₁) à l'extérieur lorsque l'élément de raccordement (5 ; 105 ; 205 ; 305 ; 405 ; 505) est à la deuxième profondeur mais pas lorsque l'élément de raccordement est à la première profondeur, **caractérisé en ce que** ledit verrou (20 ; 120 ; 220 ; 320 ; 420 ; 520) est configuré de manière à être au moins en partie rappelé (F₃) vers sa deuxième position par une surpression (P₂) dans ledit passage de purge (4, 17, 26, 34 ; 304, 317, 326, 334 ; 450 ; 517, 526).

2. Raccord selon la revendication 1, **caractérisé en ce que** le verrou (20 ; 120 ; 220 ; 320 ; 420 ; 520) est monté à coulissement de manière à être mobile selon une direction de coulissement (X-X'), dans un trou (16 ; 116 ; 316 ; 416 ; 516) communiquant avec ledit passage de purge (4, 17, 26, 34 ; 304, 317, 326, 334 ; 450 ; 517, 526).

3. Raccord selon la revendication 2, **caractérisé en ce qu'**une première portion (20A ; 320A ; 420A ; 520A) du verrou (20 ; 120 ; 220 ; 320 ; 420) sépare l'une de l'autre une première zone (16C ; 316C ; 426), soumise à la pression externe (P₀), et une deuxième zone (26 ; 326 ; 453 ; 526) qui fait partie dudit trou et communique avec le passage de purge (4, 17, 34 ; 304, 317, 334 ; 450 ; 517, 526), la première portion (20A ; 320A ; 420A ; 520A) du verrou étant disposée de telle manière qu'on rencontre cette première portion (20A ; 320A ; 420A ; 520A) lorsque, en partant de la deuxième zone, on se déplace dans le sens dans lequel s'effectue le déplacement du verrou (20 ; 120 ; 220 ; 320 ; 420) depuis sa première position vers sa deuxième position.

4. Raccord selon la revendication 3, **caractérisé en ce qu'**une deuxième portion (320B ; 420B) du verrou (320 ; 420) sépare l'une de l'autre la deuxième zone et une troisième zone, qui est soumise à la pression externe (P₀), la deuxième portion (320B ; 420B) du verrou étant décalée de la première portion (320A ; 420A) du verrou (320 ; 420) au moins selon ladite direction de coulissement (X-X'), de manière à être du même côté que ladite deuxième zone par rapport à la première portion du verrou (320A, 420A), l'aire de la section transversale de la première portion (320A ; 420A) du verrou étant supérieure à l'aire de la section transversale de la deuxième portion (320B ; 420B) du verrou.

5. Raccord selon l'une quelconque des revendications 2 à 4, **caractérisé en ce que** le verrou (20 ; 120 ; 220 ; 320 ; 420 ; 520) a une surface totale se divisant en au moins un premier, un deuxième, un troisième et éventuellement un quatrième type de surface, la ou les surfaces (29A) du premier type n'étant pas soumises à la pression du fluide se trouvant dans ledit passage de purge, la ou les surfaces (29B) du deuxième type assurant un guidage à jeu réduit et glissant sur la paroi dudit trou (16 ; 116 ; 316 ; 416 ; 516), la ou les surfaces (30A, 30B, 31) des troisième et quatrième types étant soumises à la pression (P₂) du fluide se trouvant dans ledit passage de purge (4, 17, 34 ; 304, 317, 334 ; 450 ; 517, 526), la ou les éventuelles surfaces (31) du quatrième type se distinguant de la ou des surfaces (30A, 30B) du troisième type **en ce que** cette pression (P₂) y exerce une poussée tendant à déplacer le verrou de sa deuxième position vers sa première position, l'aire de la projection de la surface du troisième type ou la somme des aires des projections des surfaces (30A, 30B) du troisième type parallèlement à ladite direction de coulissement (X-X'), sur un plan (P) perpendiculaire à cette direction de coulissement (X-X'), étant supérieure à l'aire de la projection de l'éventuelle surface (31) du quatrième type ou à la somme des aires des projections des surfaces du quatrième type parallèlement à ladite direction de coulissement (X-X'), sur un plan perpendiculaire (P) à cette direction de coulissement (X-X').

6. Raccord selon l'une quelconque des revendications précédentes, **caractérisé en ce qu'**il comporte un organe (21 ; 121) de manoeuvre du verrou (20 ; 120) au moins vers sa deuxième position, cet organe de manoeuvre (21 ; 121) et le verrou (20 ; 120) étant deux pièces distinctes.

7. Raccord selon la revendication 6 et l'une quelconque des revendications 2 à 5, **caractérisé en ce que** l'organe de manoeuvre (21 ; 121) est monté à coulissement dans le même trou (16) que le verrou (20), la partie femelle comportant une butée (23 ; 123) de retenue de l'organe de manoeuvre (21 ; 121) dans ledit trou (16).

8. Raccord selon les revendications 3 et 7, **caractérisé en ce que** l'organe de manoeuvre (21 ; 121) comporte au moins une portion formant piston et séparant l'une de l'autre la deuxième zone et une troisième zone, qui est soumise à la pression externe (P₀), ladite portion formant piston étant décalée de la première portion (20A) du verrou (20 ; 120 ; 220) au moins selon ladite direction de coulissement (X-X'), de manière à être du même côté que ladite deuxième zone par rapport à cette première portion (20_{A}) du verrou.

9. Raccord selon l'une des revendications 2 à 5, **caractérisé en ce que** ledit verrou (320 ; 420 ; 520) est accessible depuis l'extérieur du trou (316 ; 416 ; 516) dans lequel il coulisse.

10. Raccord selon la revendication 9, **caractérisé en ce que** ledit verrou (320 ; 420) est monobloc.

11. Raccord selon la revendication 9, **caractérisé en ce que** ledit verrou (520) comprend deux parties (520A, 520B) aptes à s'écarter l'une de l'autre sous l'effet de ladite surpression (P₂) dans ledit passage de purge (517, 526).

12. Raccord selon l'une quelconque des revendications précédentes, **caractérisé en ce qu'**il comporte un organe élastique (19 ; 119 ; 319 ; 419 ; 519) de rappel (F₂) du verrou (20 ; 120 ; 220 ; 320 ; 420 ; 520) vers sa première position.

13. Raccord selon l'une quelconque des revendications précédentes, **caractérisé en ce qu'**une partie amont (2 ; 202) parmi les parties mâles et femelles (2, 3 : 103 ; 202 ; 203 ; 303 ; 403 ; 503) comporte une soupape (13 ; 313 ; 413) pour son obturation, la partie aval (3 ; 103 ; 203 ; 303 ; 403 ; 503) parmi les parties mâle et femelle étant adaptée pour placer cette soupape (13; 313 ; 413) en position ouverte lorsque ledit élément de raccordement (5 ; 105 ; 240 ; 305 ; 405 ; 505) est enfoncée à ladite première profondeur et pour ne pas agir sur la position de cette soupape (13; 313 ; 413) lorsque ledit élément de raccordement (5; 105 ; 240 ; 305 ; 405 ; 505) est à ladite deuxième profondeur.

## Claims

1. Quick-action connector for temporarily joining together two pipes, an upstream and a downstream pipe (C₂, C₁), through which a pressurised gas (P₁) travels, the said connector comprising a male part (3; 103; 203; 303; 403; 503) and a female part (2; 202) which comprises, on the one hand, a hollow female element (7; 107; 240; 307; 407; 507) for the fitting-in of a male pin (5; 105; 205; 305; 405; 505) belonging to the male part (3; 103; 203; 303; 403; 503) and, on the other hand, a lock (20; 120; 220; 320; 420; 520) for retaining a connecting element (5; 105; 240; 305; 405; 505) chosen from among the male pin (5; 105; 205; 305; 405; 505) and a possible adapter (240) which can be moved between a position for locking the male pin which has been connected into the female part and a position for releasing the said male pin, the said lock being movable in relation to the female element between a first position (figure 2), in which the said lock is capable of retaining the connecting element which is inserted to a first depth in the female part and connected, with a leak-proof joint, to the said female part, and a second position (figures 3, 3A, 4; 5; 6; 7; 8; 9) in which the said lock is capable of retaining the connecting element which is inserted to a second depth which is less than the first depth, the connector comprising a passage (4, 17, 26, 34; 304, 317, 326, 334; 450; 517, 526) for purging the downstream pipe (C₁) to the outside when the connecting element (5; 105; 205; 305; 405; 505) is at the second depth but not when said connecting element is at the first depth, **characterised in that** the said lock (20; 120; 220; 320; 420; 520) is configured in such a way as to be at least partly brought back (F₃) to its second position by an overpressure (P₂) in the said purging passage (4, 17, 26, 34; 304, 317, 326, 334; 450; 517, 526).

2. Connector according to claim 1, **characterised in that** the lock (20; 120; 220; 320; 420; 520) is mounted for sliding motion in such a way as to be movable in a direction of sliding (X-X') within a hole (16; 116; 316; 416; 516) which communicates with the said purging passage (4, 17, 26, 34; 304, 317, 326, 334; 450; 517, 526).

3. Connector according to claim 2, **characterised in that** a first portion (20; 320A; 420A; 520A) of the lock (20; 120; 220; 320; 420) separates a first zone (16C; 316C; 426), which is subjected to the external pressure (P₀), and a second zone (26; 326; 453; 526), which forms part of the said hole and communicates with the purging passage (4, 17, 34; 304, 317, 334; 450; 517, 526), from one another, the first portion (20A; 320A; 420A; 520A) of the lock being disposed in such a way that the said first portion (20A; 320A; 420A; 520A) is encountered when displacement occurs, starting from the second zone, in the direction in which displacement of the lock (20; 120; 220; 320; 420) from its first position to its second position takes place.

4. Connector according to claim 3, **characterised in that** a second portion (320B; 420B) of the lock (320; 420) separates the second zone and a third zone, which is subjected to the external pressure (P₀), from one another, the second portion (320B; 420B) of the lock being offset from the first portion (320A; 420A) of the lock (320; 420), at least in the said direction of sliding (X-X'), in such a way as to be on the same side as the said second zone in relation to the first portion of the lock (320A, 420A), the area of the cross-section of the first portion (320A; 420A) of the lock being greater than the area of the cross-section of the second portion (320B; 420B) of the lock.

5. Connector according to any of claims 2 to 4, **characterised in that** the lock (20; 120; 220; 320; 420; 520) has a total surface which is divided into at least a first, a second, a third and possibly a fourth type of surface, the surface or surfaces (29A) of the first type not being subjected to the pressure of the fluid located in the said purging passage, the surface or surfaces (29B) of the second type providing guidance, with limited, sliding clearance, on the wall of the said hole (16; 116; 316; 416; 516), the surface or surfaces (30A, 30B, 31) of the third and fourth types being subjected to the pressure (P₂) of the fluid located in the said purging passage (4, 17, 34; 304, 317, 334; 450; 517, 526), the possible surface or surfaces (31) of the fourth type being distinguished from the surface or surfaces (30A, 30B) of the third type **in that** the said pressure (P₂) exerts a thrust thereupon which tends to displace the lock from its second position to its first position, the area of the projection of the surface of the third type or the sum of the areas of the projections of the surfaces (30A, 30B) of the third type parallel to the said direction of sliding (X-X'), onto a plane (P) perpendicular to the said direction of sliding (X-X'), being greater than the area of the projection of the possible surface (31) of the fourth type or than the sum of the areas of the projections of the surfaces of the fourth type parallel to the said direction of sliding (X-X'), onto a plane (P) perpendicular to the said direction of sliding (X-X').

6. Connector according to any of the preceding claims, **characterised in that** it comprises a component (21; 121) for manoeuvring the lock (20; 120) at least to its second position, the said manoeuvring component (21; 121) and the lock (20; 120) being two distinct pieces.

7. Connector according to claim 6 and any of claims 2 to 5, **characterised in that** the manoeuvring component (21; 121) is mounted for sliding motion within the same hole (16) as the lock (20), the female part comprising a stop (23; 123) for retaining the manoeuvring component (21; 121) within the said hole (16).

8. Connector according to claims 3 and 7, **characterised in that** the manoeuvring component (21; 121) comprises at least one portion which forms a piston and separates the second zone and a third zone, which is subjected to the external pressure (P₀), from one another, the said portion that forms a piston being offset from the first portion (20a) of the lock (20; 120; 220), at least in the said direction of sliding (X-X'), in such a way as to be on the same side as the said second zone in relation to the said first portion (20A) of the lock.

9. Connector according to one of claims 2 to 5, **characterised in that** the said lock (320; 420; 520) is accessible from the outside of the hole (316; 416; 516) within which it slides.

10. Connector according to claim 9, **characterised in that** the said lock (320; 420) is in one piece.

11. Connector according to claim 9, **characterised in that** the said lock (520) comprises two parts (520A, 520B) which are capable of moving apart from one another under the effect of the said overpressure (P₂) in the said purging passage (517, 526).

12. Connector according to any of the preceding claims, **characterised in that** it comprises an elastic component (19; 119; 319; 419; 519) for bringing the lock (20; 120; 220; 320; 420; 520) back (F₂) to its first position.

13. Connector according to any of the preceding claims, **characterised in that** an upstream part (2; 202) from among the male and female parts (2, 3; 103; 202; 203; 303; 403; 503) comprises a valve (13; 313; 413) for occluding it, the downstream part (3; 103; 203; 303; 403; 503) from among the male and female parts being adapted to locate the said valve (13; 313; 413) in the open position when the said connecting element (5; 105; 240; 305; 405; 505) is inserted to the said first depth, and to not act upon the position of the said valve (13; 313; 413) when the said connecting element (5; 105; 240; 305; 405; 505) is at the said second depth.

## Patentansprüche

1. Schnellkupplung für die temporäre Verbindung von zwei jeweils stromaufwärts und stromabwärts liegenden Leitungen (C₂, C₁), die von einem unter Druck (P₁) stehenden Gas durchströmt werden, wobei diese Kupplung ein Einsteckteil (3; 103; 203; 303; 403; 503) und ein Aufnahmeteil (2; 202) einschließt, das einerseits ein hohles Aufnahmeelement (7; 107; 240; 307; 407; 507) für das Einführen eines Einsteckstücks (5; 105; 205; 305; 405; 505) des Einsteckteils (3; 103; 203; 303; 403; 503) und andererseits einen Riegel (20; 120; 220; 320; 420; 520) zum Halten eines Verbindungselements (5; 105; 205; 305; 405; 505) umfasst, das ausgewählt ist aus dem Einsteckstück (5; 105; 205; 305; 405; 505) und einem möglichen Adapter (240), der zwischen einer Verriegelungsposition des in das Aufnahmeteil eingesetzten Einsteckstücks und einer Position zur Freisetzung dieses Einsteckstücks beweglich ist, wobei der Riegel in Bezug auf das Aufnahmeelement zwischen einer ersten Position (Fig. 2), in der der Riegel in der Lage ist, das Verbindungselement zu halten, das zu einer ersten Tiefe in das Aufnahmeteil eingesetzt ist und in dichter Verbindung an dieses Aufnahmeteil angeschlossen ist, und einer zweiten Position (Fign. 3, 3A, 4; 5; 6; 7; 8; 9) beweglich ist, in der der Riegel in der Lage ist, das Verbindungselement zu halten, das bis zu einer zweiten Tiefe, geringer als die erste Tiefe, eingesetzt ist, wobei die Kupplung einen Kanal (4, 17, 26, 34, 304, 317, 326, 334; 450; 517; 526) zur Spülung des mit der stromabwärts gelegenen Leitung (C₁) verbundenen Verbindungselements nach außen umfasst, wenn das Verbindungselement (5; 105; 205; 305; 405; 505) in der zweiten Tiefe liegt, aber nicht, wenn das Verbindungselement in der ersten Tiefe liegt,
**dadurch gekennzeichnet, dass**
der Riegel (20; 120; 220; 320; 420; 520) derart ausgebildet ist, dass er mindestens teilweise zu seiner zweiten Position durch Überdruck (P₂) in dem Spülkanal (4, 17, 26, 34; 304, 317, 326, 334; 450; 517, 526) vorgespannt (F₃) ist.

2. Kupplung nach Anspruch 1, **dadurch gekennzeichnet, dass** der Riegel (20; 120; 220; 320; 420; 520) gleitend montiert ist, derart, dass er gemäß einer Gleitrichtung (X-X') in einem Loch (16; 116; 316; 416; 516) beweglich ist, das mit dem Spülkanal (4, 17, 26, 34; 304, 317, 326, 334; 450; 517; 526) kommuniziert.

3. Kupplung nach Anspruch 2, **dadurch gekennzeichnet, dass** ein erster Bereich (20A; 320A, 420A; 520A) des Riegels (20; 120; 220; 320; 420) eine erste Zone (16C; 316C; 426), die dem Außendruck (P₀) unterworfen ist, und eine zweite Zone (26; 326; 453; 526), die Teil des Lochs ist und mit dem Spülkanal (4, 17, 34; 304, 317, 334; 450; 517, 526) kommuniziert, voneinander trennt, wobei der erste Bereich (20A; 320A; 420A, 520A) des Riegels derart angeordnet ist, dass man diesen ersten Bereich (20A; 320A; 420A; 520A) trifft, wenn man sich ausgehend von der zweiten Zone in die Richtung bewegt, in der die Verschiebung des Riegels (20; 120; 220; 320; 420) von seiner ersten Position in die zweite Position durchgeführt wird.

4. Kupplung nach Anspruch 3, **dadurch gekennzeichnet, dass** ein zweiter Bereich (320B; 420B) des Riegels (320; 420) die zweite Zone und eine dritte Zone, die dem Außendruck (P₀) unterworfen ist, voneinander trennt, wobei der zweite Bereich (320B; 420B) des Riegels zu dem ersten Bereich (320A,; 420A) des Riegels (320; 420) zumindest gemäß der Gleitrichtung (X-X') versetzt ist, um auf der gleichen Seite zu sein in Bezug auf den ersten Bereich des Riegels (320A, 420A), wobei der Flächeninhalt des Querschnitts des ersten Bereichs (320A; 420A) des Riegels größer als der Flächeninhalt des Querschnitts des zweiten Bereichs (320B; 420B) des Riegels ist.

5. Kupplung nach einem beliebigen der Ansprüche 2 bis 4, **dadurch gekennzeichnet, dass** der Riegel (20; 120; 220; 320; 420; 520) eine Gesamtfläche aufweist, die sich mindestens in eine erste, eine zweite, eine dritte und gegebenenfalls in eine vierte Art von Fläche teilt, wobei die Fläche(n) (29A) der ersten Art nicht dem Druck des Fluids unterworfen ist, der sich in dem Spülkanal befindet, wobei die Fläche(n) (29B) der zweiten Art eine Führung mit reduziertem Spiel sicherstellen und an der Wand des Lochs (16; 116; 316; 416; 516) gleiten und die Fläche(n) (30A, 30B, 31) der dritten und vierten Art dem Druck (P₂) des Fluids unterworfen sind, der sich in dem Spülkanal (4, 17, 34; 304, 317, 334; 450; 517, 526) befindet, wobei die mögliche(n) Fläche(n) (31) der vierten Art sich von der oder den Flächen (30A, 30B) der dritten Art **dadurch** unterscheiden, dass dieser Druck (P₂) darauf eine Schubkraft ausübt, die dazu neigt, den Riegel von seiner zweiten Position in seine erste Position zu verschieben, wobei der Flächeninhalt der Projektion der Fläche der dritten Art oder die Summe der Flächeninhalte der Projektionen der Flächen (30A, 30B) der dritten Art parallel zu der Gleitrichtung (X-X') auf eine Ebene (P) senkrecht zu dieser Gleitrichtung (X-X') größer ist als der Flächeninhalt der möglichen Fläche (31) der vierten Art oder als die Summe der Flächeninhalte der Projektionen der Flächen der vierten Art parallel zu der Gleitrichtung (X-X') auf eine Ebene senkrecht (P) zu der Gleitrichtung (X-X').

6. Kupplung nach einem der vorhergehenden Ansprüche, **dadurch gekennzeichnet, dass** sie ein Organ (21; 121) zur Betätigung des Riegels (20; 120) mindestens in Richtung seiner zweiten Position aufweist, wobei dieses Betätigungsorgan (21; 121) und der Riegel (20, 120) zwei getrennte Teile sind.

7. Kupplung nach Anspruch 6 und einem beliebigen der Ansprüche 2 bis 5, **dadurch gekennzeichnet, dass** das Betätigungsorgan (21; 121) gleitend in demselben Loch (16) wie der Riegel (20) angeordnet ist, wobei das Aufnahmeteil einen Anschlag (23; 123) zum Halten des Betätigungsorgans (21; 121) in dem Loch (16) aufweist.

8. Kupplung nach den Ansprüchen 3 und 7, **dadurch gekennzeichnet, dass** das Betätigungsorgan (21, 121) mindestens einen einen Kolben bildenden Bereich aufweist, der die zweite Zone und eine dritte Zone voneinander trennt, die dem Aussendruck (P₀) unterworfen ist, wobei der den Kolben bildende Bereich zu dem ersten Bereich (20A) des Kolbens (20; 120; 220) zumindest gemäß der Gleitrichtung (X-X') versetzt ist, derart, dass er auf der gleichen Seite wie die zweite Zone in Bezug auf diesen ersten Bereich (20A) des Riegels ist.

9. Kupplung nach einem der Ansprüche 2 bis 5, **dadurch gekennzeichnet, dass** der Riegel (320; 420; 520) von außerhalb des Lochs (316; 416; 516) zugänglich ist, in dem er gleitet.

10. Kupplung nach Anspruch 9, **dadurch gekennzeichnet, dass** der Riegel (320; 420) einstückig ist.

11. Kupplung nach Anspruch 9, **dadurch gekennzeichnet, dass** der Riegel (520) zwei Teile (520A, 520B) umfasst, die geeignet sind, sich unter der Wirkung des Überdrucks (P₂) in dem Spülkanal (517, 526) voneinander zu entfernen.

12. Kupplung nach einem der vorhergehenden Ansprüche, **dadurch gekennzeichnet, dass** sie ein elastisches Organ (19; 119; 319; 419; 519) zur Vorspannung (F₂) des Riegels (20; 120; 220; 320; 420; 520) in seine erste Position aufweist.

13. Kupplung nach einem beliebigen der vorhergehenden Ansprüche, **dadurch gekennzeichnet, dass** ein stromaufwärts gelegener Teil (2; 202) unter den Einsteck- und Aufnahmeteilen (2, 3; 103; 202; 203; 303; 403; 503) ein Ventil (13; 313; 413) für sein Verschließen umfasst, wobei der stromabwärts gelegene Teil (3; 103; 203; 303; 403; 503) unter den Einsteck- und Aufnahmeteilen eingerichtet ist, um dieses Ventil (13; 313; 413) in die offene Position zu platzieren, wenn das Verbindungselement (5; 105; 240; 305; 405; 505) in die erste Tiefe eingesetzt ist, und nicht auf die Position dieses Ventils (13; 313; 413) einzuwirken, wenn das Verbindungselement (5; 105; 240; 305; 405; 505) sich in der zweiten Tiefe befindet.
